Europäisches Patentamt

European Patent Office

Office européen des brevets

(11) Publication number: **0 128 672**
**A1**

# EUROPEAN PATENT APPLICATION

(21) Application number: 84303253.3

(22) Date of filing: 14.05.84

(51) Int. Cl.³: **G 06 F 13/00**

(30) Priority: 13.05.83 GB 8313272

(43) Date of publication of application: 19.12.84
Bulletin 84/51

(84) Designated Contracting States: DE FR GB IT

(71) Applicant: Gale, Ira Dennis, 42c, South Audley Street,
London, W.1. (GB)

(72) Inventor: Gale, Ira Dennis, 42c South Audley Street,
London, W1Y 5DH (GB)
Inventor: Shain, Michael, 4 Greenhalgh Walk, London,
N2 ODJ (GB)

(74) Representative: Abbott, David John et al, Abel & Imray
Northumberland House 303-306 High Holborn, London,
WC1V 7LH (GB)

(54) Data security device.

(57) A security device for use in a computer based system includes volatile data storage means storing an encryption key and data processing means in a closed container. The power supply necessary to operate the storage means is conveyed by a conductor winding over the entire inside surface of the container so that breaking into the container causes interruption of the supply and destruction of the stored data. The data processing means uses the key for encryption and decryption but prevents access to the key itself. The key is entered and stored in the storage means after assembly either using additional conductors later removed or destroyed or by means of a initial program of the processing means which later cannot be run.

## DATA SECURITY DEVICE

This invention relates to a security device suitable for protecting data in a computer system.

In a commercial organisation it is common for a computer to be located at one place and the other places to have terminals which can be linked to the computer via telephone or data lines; these may be in the same or different buildings. One problem which can occur with such an arrangement is that persons not authorised by the organisation can sometimes obtain access to data stored in the computer, for example by obtaining details of telephone numbers and passwords from authorised personnel. The security of data stored in the computer is of major importance to an organisation and for this reason various proposals have been made to transmit the data between the computer and the terminals in encrypted form. Preferably, such encryption is transparent to the user, that is to say he is not made aware that the data is being encrypted and decrypted. This can be achieved by the provision of an encryption unit at the terminal which handles the conversion of outgoing and incoming data. The security of the data can be maintained in this way provided that the details of the encryption remain secret.

Although it is not possible to maintain the secrecy of the encryption operation for an indefinite period, it is possible to arrange that the time period necessary to analyse the encrypted data is sufficiently long that the encryption can be regarded as unbreakable. One way of achieving this is to employ a known encryption algorithm in conjunction with a secret key word or number. It follows therefore that the security of data in a computer system will depend on whether or not the key word or number can be kept secret.

It is an object of the present invention to provide a device which will enable data such as a key word or number to be kept secret.

According to the present invention there is provided a data security device including a closed container within which are provided a data processing component and a volatile multi-bit data storage component arranged so that access to the data stored in the storage component is controlled by the data processing component which has the only external connections to the device for data transmission, wherein the arrangment of the power supply to the storage component is such that the data stored in the component is destroyed by breaking into the container.

One or more power supply conductive members to the storage component may be adhering to the inside surface of the container which may be of a brittle material so that fracture of the material of the container results in breakage of the electrical continuity of the conductive members. Parts of the conductive members may be interleaved with earthed conductors so that the power supply is short-circuited should damage to the container cause the two to come into contact.

0128672

In one embodiment of the invention the data storage component is a CMOS random access memory (RAM) integrated circuit and the power supply for this circuit is provided by a battery within the closed container. In an alternative arrangement, both the data processing component and the data storage component are formed by a single integrated circuit, preferably constructed using CMOS technology. The battery for powering the data storage component may also power the data processing component and may be mounted within the container as mentioned above or may be external to the container and connected to the components by conductors passing through the wall of the container. The battery may be replaced with or assisted by another type of power supply.

The container itself is preferably made of an electrically insulating material, although if it were of an electrically conducting material the conductive members should be attached to it by means of an electrically insulating adhesive. A suitable material for the container is prestressed glass produced, for example, by heat treatment after manufacture so that if the surface of the material is broken the container breaks up into many pieces. The conductive members may be formed on the inner surface of the container by evaporating a thin film of metal onto the surface and then etching it to a meandering configuration so that breakage of any part of the wall of the container would result in open-circuiting the electrical connection.

-4- 0128672

In another arrangement an earthed conductor may be mounted close to the conductive members on the container surface so as to short-circuit the supply if a conductive fluid is used to by-pass breakages in the conductive members. The container is preferably made in two parts, although it may be made in more than two parts, fixed together, and the meandering electrical connections are disposed over the inner surface of both parts and joined together by conductive lands formed at the mating faces of the parts.

Without special arrangements, the data to be stored in the data storage component must be recorded after the container has been closed, because no power can be applied to the data storage component until the container is complete. It is possible to perform the recording of the data using the data processing component and then arrange that after being reset the data processing component derives its instructions from the data storage component which are arranged so that external access to the stored data is controlled by the data processing component. In an alternative arrangement, temporary connections may be provided within the container to enable the data to be stored in the storage component, which connections are then destroyed, for example, by laser or passing current through them, using diodes to apply the current so that the secrecy of the stored data can be maintained.

In order that the invention may be fully understood and readily carried into effect, one example of it will now be described with reference to the accompanying drawings, of which:-

FIGURE 1  is a block diagram showing the principle of one type of secure data transmission system;

FIGURE 2  is a diagram of one example of a device according to the invention; and

FIGURE 3  shows one possible pattern for the conductive members applied to the inside surface of the container.

0128672

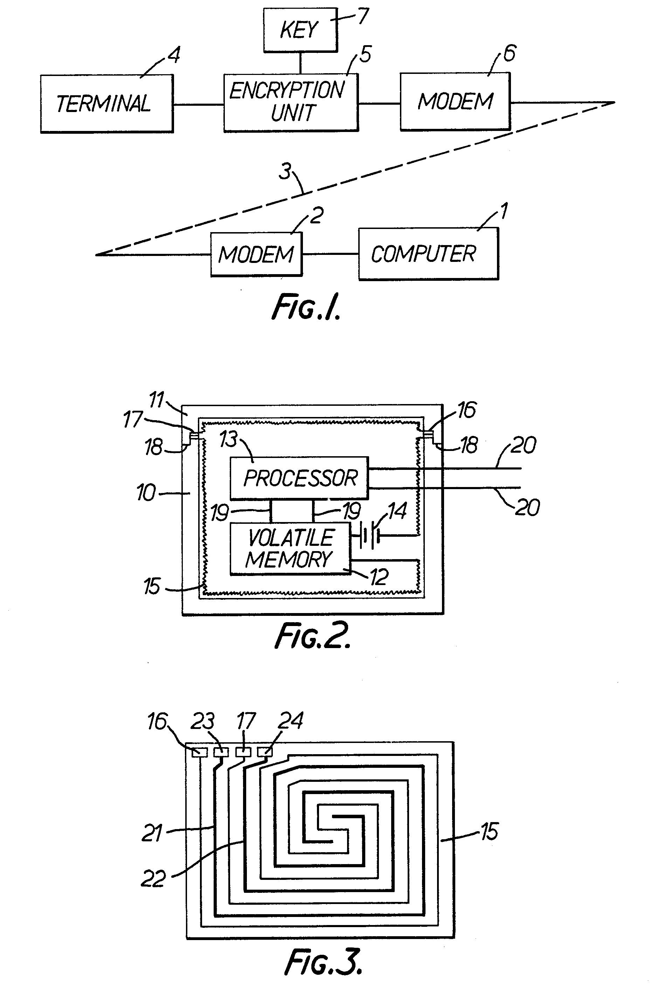

In the system shown in Figure 1, a computer 1 is connected through a modem 2 to a public telephone or data transmission line represented by a dotted line 3. At the other end of the telephone or data line connection there is a terminal 4 connected to the line 3 through an encryption/decryption unit 5 and a modem 6. The key word or number for the encryption/decryption unit 5 is stored in a key unit 7 which may be arranged to be detachable from the unit 5, for example, by means of a plug and socket connection so that the key unit 7 may be detached and locked in a safe when not in use so as to prevent unauthorised access to it.

In the operation of the system shown in Figure 1, a data entry made at the terminal 4 is encrypted by the unit 5 using the key 7 and some encryption algorithm, and the resulting data is transmitted by the modem 6 through the line 3 and the modem 2 to the computer 1. The computer 1 may be arranged to test the encrypted data which it receives to make sure that it originated from an encryption unit using the correct key and algorithm and it may then decrypt the data and act on it as required. Similarly, data from the computer 1 is transmitted in an encrypted form via the modem 2, line 3 and modem 6 to to unit 5 which then decrypts the incoming data and displays it at the terminal 4. As in the computer 1, the unit 5 may be arranged to test the incoming data to ensure that it is encrypted using the correct key and algorithm.

The operation of the system shown in Figure 1 is transparent in that the user is not aware of the encryption and decryption of the data and the fact that it is transmitted in encrypted form over the line 3.

It will be appreciated that in practice there will be other terminals 4 connected to the computer 1 and each of these terminals will have its own encryption/decryption unit and modem.

Figure 2 is a diagram of one example of the device according to the invention which includes a container consisting of a housing 10 and a lid 11, joined by a suitable adhesive and both formed of a brittle material which tends to shatter if its surface is broken at any point; one such material is prestressed glass produced by heat treatment. Preferably, the material is an electrical insulator although an electrically conductive material could alternatively be used. Within the container there is located a CMOS RAM integrated circuit chip 12, a processor 13 and a battery 14. The battery 14 supplies the energising power for the RAM 12 and is connected to it via a conductor 15 adhering to the inside surface of the container and meandering over the entire inner surface of both the housing 10 and the lid 11. The part of the conductor 15 on the lid 11 is connected to the part on the housing 10 by pairs of contacts 16 and 17 at the joint faces 18 between the housing 10 and the lid 11. The joint faces 18 themselves are stepped so that it is not possible for a straight conductive tool to be passed along them to reach the contacts 16, 17.
The conductor 15 may be formed by an evaporated metal
film etched to the required meandering pattern. Since
the current drawn by the CMOS RAM 12 is very small, the
metal film forming the conductor 15 can be very thin
because its resistance will not result in a significant
drop in the voltage from the battery 14 which reaches
the RAM 12. If desired, the processor 13 may also be a
CMOS integrated circuit and may be powered by the battery
14. Alternatively, the processor 13 may be powered from
external source by conductors not shown passing through
the wall of the container. Data and address buses 19
are connected from the processor 13 to the RAM 12 and
input and output lines 20 are connected from the
processor 13 to the exterior of the container.

The processor 13 operates in response to a program
stored in the RAM 12 which is such as to prevent read-out
of the contents of the RAM 12 via the input and output
lines 20, except under the strict control of the
processor, so that unauthorised persons cannot examine
the contents of the RAM 12 by applying signals to the
input and output lines 20. It may also be arranged that
modification of the data stored in the RAM 12 by the
application of signals to the input and output lines 20
is also blocked by the processor 13.

It will be appreciated that since the power supply
to the RAM 12 is only present when the container is closed
and the processor 13 is programmed so as not to permit direct access to the RAM 12 via the input and output lines 20, there would be a problem in arranging for the storage of the data required in the RAM 12 in the first instance if writing into the RAM 12 is blocked by the processor 13. This problem may be overcome in a number of ways. For example, the processor 13 may be provided with an intiation program which enables the RAM 12 to be accessed via the input and output lines 20 so that the data can be stored in the RAM 12, and then on resetting of the processor 13 the instruction counter is arranged to return to such a position in the program that further writing to the RAM 12 directly from the lines 20 is prevented. Another way of solving the problem is to provide one or more additional conductors which enable the RAM 12 to be addressed externally and then to destroy these conductors once the data has been stored in the RAM, for example by the application of electrical currents through diodes or by the use of lasers. A further way in which the problem can be solved is to provide an external conductor extending from contact 16 to contact 17 on the housing 10 so that the RAM 12 can be powered by the battery 14 without the lid 11 being in place and other connections made to the RAM 12; and then when the data has been stored the lid is put on the housing and the external conductor removed.

Figure 3 shows one example of the lay-out of part of the conductor 15 over one surface of the housing 10 or the lid 11. In Figure 3, the pattern of the conductor 15 is bifilar so that external electric fields cannot be used to maintain power supply to RAM 12 if the conductor 15 is broken. The parts of the conductor 15 are interleaved with conductors 21 and 22 which are earthed or taken to a voltage source so that if the conductor 15 were to be connected to either of the conductors 21 and 22, the supply to the RAM 12 would be altered so much that the data stored would be destroyed.

It will be appreciated that a device according to the invention can be made quite small and portable. Normally, the RAM 12 and processor 13 would be used to perform the whole of the encryption and decryption operation required, but in an alternative arrangement the device could store only the key and could be plugged into an encryption unit to provide the key for it. In a modification of the device the battery is replaced or assisted by a power supply external of the container. An external battery may be shunted by a high capacity capacitor, so that the battery could be changed without destruction of the stored data.

Although the invention has been described with a CMOS RAM used as the volatile memory, any other type of data memory may be used instead provided that the storage is volatile, that is to say the data stored is quickly lost if the power supply to the memory is interrupted or changed drastically.

A particular application of devices according to the invention is in a data processing system for a shop having several point of sale terminals.  In such a system more than one key may be employed permitting access to different parts of the computer memory, so that, for example, sales assistants can record sales and refunds and make stock enquiries, managers can obtain financial totals and software engineers can have access to the programs in the computer.

The device may include timing means in addition to storing the key so that it will permit use of the terminal only at certain times of the day, for example the opening hours of a shop.  The timing means may also be protected from interference in the same way as the key.  The timing means may also be used to monitor the number of hours use of the device so that where equipment is hired for a period it can disable itself automatically at the end of that period.

As described above, the processor 13 inside the containers 10, 11 performs only the calculations using the encryption key, but in a modification the processor 13 performs all of the operations required of the unit to which it is connected.  Although it may be just a single integrated circuit, the processor 13 may include several integrated circuits and other components on a thick film circuit or a printed circuit board. The processor will include a read-only memory (ROM) for storing instructions for the process steps and possibly other data such as passwords for controlling access to certain areas of the computer memory; if desired, the data may be stored in the ROM in encrypted form so that it cannot be obtained from the ROM by taking the unit apart.

0128672

WHAT WE CLAIM IS:

1.    A data security device including a closed container within which are provided a data processing component and a volatile multi-bit data storage component arranged so that access to the data stored in the storage component is controlled by the data processing component which has the only external connections to the device for data transmission, wherein the arrangement of the power supply to the storage component is such that the data stored in the component is destroyed by breaking into the container.

2.    A device according to claim 1 wherein the power supply for the storage component is conveyed along one or more conductive members adhering to the inside surface of the container in such a way that breaking into the container will interrupt the power supply to the storage component.

3.    A device according to claim 2 wherein the or each conductive member is a narrow strip of thin film conductive material adhering to the surface of a brittle electrically insulating material forming at least part of the wall of the container, the strip following a winding path over the entire inside surface of the container, so that breaking into the container will rupture the narrow strip and open-circuit the power supply to the storage equipment.

4.      A device according to claim 3 including a second conductive strip interleaved between parts of the narrow strip and also adhering to the surface of the electrically insulating material, the second strip being connected so as to cause destruction of the data stored in the storage component if the narrow strip and the second strip become electrically connected.

5.      A device according to any preceding claim in which the data storage component stores an encryption key and the data processing component is programmed to execute encryption and/or decryption using the stored key of data applied to the device when corresponding instructions are applied to the data processing component.

6.      A device according to claim 5 in which the data processing component includes a read-only memory, wherein at least part of the data stored in the read-only memory is in encrypted form.

7.      A device according to any preceding claim in which the data storage component stores part of the program of the data processing component without which the program cannot be run correctly.

8.      A device according to any preceding claim wherein when it is assembled within the container one or more additional conductors are provided for enabling data to be entered and stored in the volatile data

0128672

storage component, and after that data has been stored the additional conductor or conductors are removed or destroyed.

9. A device according to any of claims 1 to 7 wherein the data processing component is arranged initially to execute a program enabling data to be entered and stored in the volatile data storage component and is subsequently prevented from executing that program.

10. A device according to any preceding claim including timing means powered by the power supply for the volatile data storage component.

11. A computer system having one or more terminals remotely located from the component itself, wherein the or each terminal includes a device according to any preceding claim for encrypting and/or decrypting communications between the terminal and the computer.

1/1

0128672

Fig./.

Fig.2.

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-3 023 427 (EHRAT) <br> * Page 7, line 1 - page 10, line 30; page 13, lines 12-26 * | 1,2 | G 06 F 13/00 |
| A | <br><br> * Page 7, line 1 - page 10, line 30; page 13, lines 12-26; page 14, line 1 - page 19, line 16 * | 3,5,8-11 | |
| | ----- | | |

| | TECHNICAL FIELDS SEARCHED (Int. Cl. ³) |
|---|---|
| | G 06 F 13 |

The present search report has been drawn up for all claims

| Place of search | Date of completion of the search | Examiner |
|---|---|---|
| THE HAGUE | 26-07-1984 | LEPEE W. |